# EUROPEAN PATENT APPLICATION

(11) **EP 4 843 742 A1**
(43) Date of publication of application: **25.11.2026**
(21) Application number: 25741987.9
(22) Date of filing: 16.01.2025
(51) Int. Cl.: B29C 45/14, B29C 65/70, C08L 21/00, C08L 101/00

(54) **COMPOSITE MOLDED ARTICLE AND RESIN COMPOSITION**

(30) Priority: 16.01.2024 JP 2024004923
(71) Applicant: Daicel Corporation, Osaka-shi, Osaka 530-0011 (JP)
(72) Inventor: HIROTA, Kento, Fuji-shi, Shizuoka 416-8533 (JP); OHI, Kazuki, Fuji-shi, Shizuoka 416-8533 (JP)
(74) Representative: Maiwald GmbH
(86) International application number: PCT/JP2025/001176
(87) International publication number: WO 2025/154762

(57) **Abstract**

A composite molded article capable of sufficiently ensuring airtightness not only in the initial state but also after a thermal shock test, and a resin composition for obtaining such a composite molded article are provided. An aspect of the present invention provides a composite molded article 10 including a member 20 and a resin molded article 30 joined to the member 20, wherein the member 20 has a surface-roughened portion 21 having a recess 21A on at least a part of a surface 20A of the member 20, the resin molded article 30 includes a resin 31 that extends at least into the recess 21A, and a stretched elastomer 32 present in the resin 31 and having an aspect ratio, defined as the ratio of its major axis to minor axis, of 1.5 or more in a cross section obtained by cutting the composite molded article 10 in the thickness direction of the resin molded article 30, and in the cross section, at least a portion of the stretched elastomer 32 is present along the interface IF between the member 20 and the resin molded article 30 in a recess interfacial region R located within the recess 21A and aligned with the interface IF.

## Description

### [Cross-Reference to Related Applications]

The present application claims priority to Japanese Patent Application No. 2024-4923, filed January 16, 2024, the entire disclosure of which is incorporated herein by reference.

### [Technical Field]

The present invention relates to a composite molded article and a resin composition.

### [Background Art]

By combining materials having different properties, such as electrically conductive materials like metals and electrically insulating materials like resins, lightweight, high-strength, or highly functional parts are used in various fields. For example, a metal-resin composite molded article obtained by joining a metal member and a thermoplastic resin is used for automotive interior members such as console boxes around an instrument panel, engine peripheral components, interior components, housing parts of electronic devices such as digital cameras and mobile phones, interface connection parts, and power terminal parts.

Methods such as adhesive bonding and screw fastening are generally known as joining methods for different materials such as metals and resins; however, such methods are undesirable because they increase the number of steps and parts. Therefore, various methods have been proposed for joining a member made of a metal material or the like and a resin material.

For example, Patent Document 1 discloses laser processing on the surface of a metal material in a certain scanning direction, followed by laser processing in another scanning direction crossing that direction, and joining a different material to the surface. Patent Document 2 discloses improving bonding strength when a resin molded article is joined to the surface of a metal plate by setting an undercut ratio of irregularities within a predetermined range when forming the irregularities on the surface of the metal plate. Patent Document 3 discloses a metal-resin composite molded article obtained by forming crater-shaped depressions on the metal surface by laser irradiation or the like, and forming granular spatter on eave-like raised portions formed by melting and scattering of the metal surface. Patent Document 4 discloses a composite structure formed by joining a surface-roughened metal member and a polyarylene sulfide resin composition member, wherein the number average of the developed interfacial area ratio (Sdr) at any five points on the surface of the surface-roughened metal member, as measured with a confocal microscope in accordance with ISO (International Organization for Standardization) 25178, is 5 or more, and the PPS resin has a melt viscosity in the range of 15 to 500 Pa·s. Furthermore, Patent Document 5 discloses a metal insert part and a method for producing a resin molded article using the metal insert part, for the purpose of ensuring airtightness and providing excellent durability by performing insert molding using a resin material and a metal material.

### [Citation List]

### [Patent Literature]

[Patent Literature 1] Japanese Patent No. 4020957
[Patent Literature 2] Japanese Patent Laid-Open No. 2020-116806
[Patent Literature 3] Japanese Patent Laid-Open No. 2013-71312
[Patent Literature 4] Japanese Patent No. 6819798
[Patent Literature 5] Japanese Patent No. 6615478

### [Summary of Invention]

### [Technical Problem]

However, in conventional methods for joining a member made of a metal material or the like and a resin material, it has not been possible to sufficiently ensure airtightness at the joint between the member and the resin material (that is, inconveniences such as formation of gaps at the joint may occur), and improvement of this point has been required. Furthermore, when the composite molded article is used in an environment with large temperature changes, such as automotive engine peripheral components, since the coefficients of thermal expansion and contraction (so-called linear expansion coefficients) differ significantly between the resin and the metal, the following problems may occur. For example, when the resin member of a metal-resin composite molded article is thin or has a large thickness variation, and the metal member has a sharp corner, failure of the composite molded article may occur due to temperature changes during use. Therefore, the applications and shapes of metal-resin composite molded articles are currently quite limited. Accordingly, there is a strong demand for a composite molded article that can withstand temperature changes over a long period.

The present invention has been made in order to solve the above problems. That is, an object of the present invention is to provide a composite molded article capable of sufficiently ensuring airtightness not only in the initial state but also after a thermal shock test, and a resin composition for obtaining such a composite molded article.

### [Solution to Problem]

[1] A composite molded article comprising a member and a resin molded article joined to the member, wherein the member has a surface-roughened portion having a recess on at least a part of a surface thereof, the resin molded article comprises a resin that extends at least into the recess, and a stretched elastomer present in the resin and having an aspect ratio, defined as the ratio of its major axis to minor axis, of 1.5 or more in a cross section obtained by cutting the composite molded article in the thickness direction of the resin molded article, and in the cross section, at least a portion of the stretched elastomer is present along the interface between the member and the resin molded article in a recess interfacial region located within the recess and aligned with the interface.
[2] The composite molded article according to [1], wherein the stretched elastomer is a reactive elastomer, and the reactive elastomer has a glycidyl group.
[3] The composite molded article according to [1] or [2] above, wherein the resin is composed of a polyarylene sulfide-based resin composition, and the polyarylene sulfide-based resin composition has a melt viscosity of 10 Pa·s or more and 350 Pa·s or less.
[4] The composite molded article according to [1] or [2] above, wherein the resin is composed of a polybutylene terephthalate-based resin composition, and the polybutylene terephthalate-based resin composition has a melt viscosity of 50 Pa·s or more and 300 Pa·s or less.
[5] The composite molded article according to any one of [1] to [4] above, wherein the member is a metal member, and the surface-roughened portion is a metal cluster.
[6] A resin composition used for producing the composite molded article according to any one of [1] to [5] above, the resin composition comprising a resin and an elastomer having an aspect ratio, defined as the ratio of its major axis to minor axis, of 1 or more and less than 1.5, wherein when the resin composition is molded at a molding temperature equal to or higher than the melting point of the elastomer such that the resin composition extends into a recess of the member having a surface-roughened portion having the recess on at least a part of a surface thereof, the elastomer is stretched in a recess interfacial region located within the recess and aligned with the interface between the member and the resin molded article, thereby forming a stretched elastomer having an aspect ratio of 1.5 or more along the interface.

According to one aspect of the present invention, a composite molded article capable of sufficiently ensuring airtightness not only in the initial state but also after a thermal shock test, and a resin composition for obtaining such a composite molded article are provided.

### [Brief Description of Drawings]

[Figure 1] Figure 1A is a plan view of a composite molded article according to an embodiment, and Figure 1B is a side view of the composite molded article according to the embodiment.
[Figure 2] Figure 2 is an enlarged cross-sectional view of a portion of the composite molded article shown in Figure 1 when the composite molded article is cut in the thickness direction of the composite molded article.
[Figure 3] Figure 3A is a plan view of the member shown in Figure 1, and Figure 3B is a side view of the member shown in Figure 1.
[Figure 4] Figure 4 is a diagram schematically illustrating the state of the interface between the member and the resin molded article depending on the magnitude of Spc of the surface of the member in the composite molded article.
[Figure 5] Figure 5A is a plan view of the composite molded article of Example 4, and Figure 5B is a cross-sectional view taken along line X-X of Figure 5A.
[Figure 6] Figure 6 is a schematic diagram of the test apparatus used in the airtightness test.
[Figure 7] Figure 7 is a scanning electron micrograph of a cross section of the composite molded article according to Example 4, obtained by cutting the composite molded article in the thickness direction of the composite molded article.
[Figure 8] Figure 8 is a scanning electron micrograph of a cross section of the composite molded article according to Comparative Example 2, obtained by cutting the composite molded article in the thickness direction of the composite molded article.
[Figure 9] Figures 9A to 9E are diagrams schematically illustrating a process for producing test pieces of Reference Examples 1 to 5.

### [Description of Embodiments]

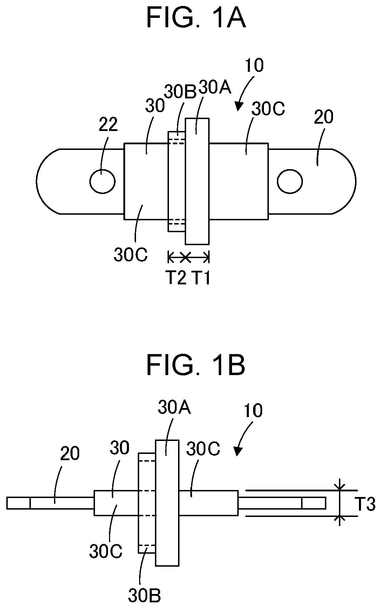

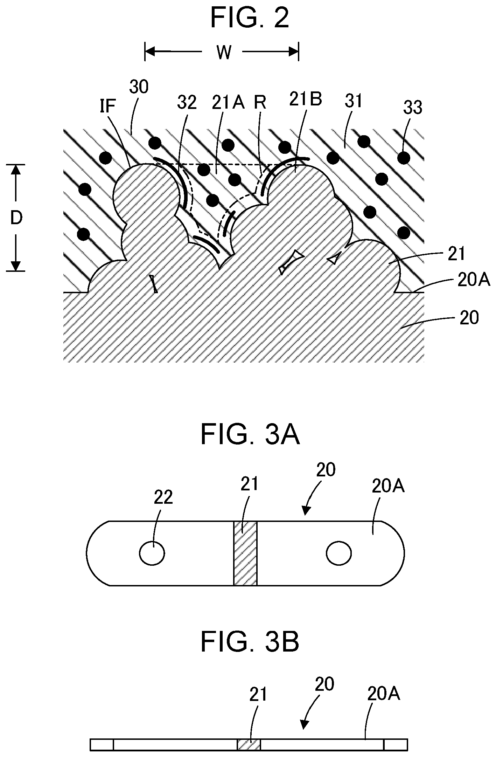

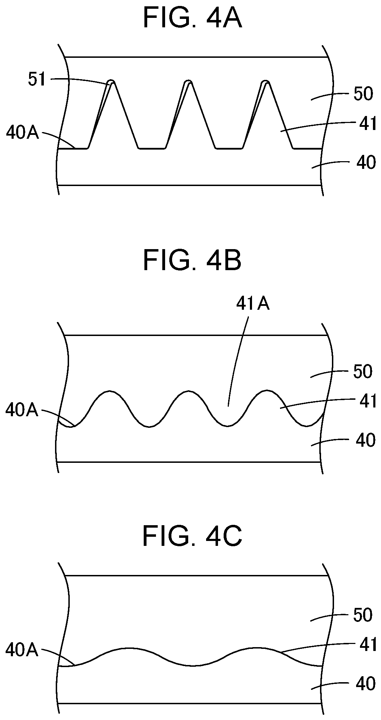

Hereinafter, a composite molded article and a resin composition according to an embodiment of the present invention will be described. Figure 1A is a plan view of a composite molded article according to the present embodiment, and Figure 1B is a side view of the composite molded article according to the present embodiment. Figure 2 is an enlarged cross-sectional view of a portion of the composite molded article shown in Figure 1 when the composite molded article is cut in the thickness direction of the composite molded article. Figure 3A is a plan view of the member shown in Figure 1, and Figure 3B is a side view of the member shown in Figure 1. Figure 4 is a diagram schematically illustrating the state of the interface between the member and the resin molded article depending on the magnitude of Spc of the surface of the member in the composite molded article.

### <<<Composite molded article>>>

The composite molded article 10 shown in Figure 1 comprises a member 20 and a resin molded article 30 joined to the member 20. The composite molded article 10 shown in Figure 1 is a busbar. The composite molded article is not limited to a busbar and is used in various applications. For example, the metal-resin composite molded article may be used for automotive interior members such as console boxes around an instrument panel, engine peripheral components, interior components, housing parts of electronic devices such as digital cameras and mobile phones, interface connection parts, and power terminal parts.

### <<Member>>

The member 20 has a surface-roughened portion 21 having a recess 21A on at least a part of a surface 20A of the member 20 (see Figures 2, 3A, and 3B), and two through holes 22 penetrating in the thickness direction of the member 20 (see Figures 1A and 3A). The member 20 may not have the through hole 22 as long as it has the surface-roughened portion 21. The surface-roughened portion 21 has an uneven shape, and the resin 31 described later extends into the recess 21A in the surface-roughened portion 21, as shown in Figure 2.

The opening width W of the recess 21A (see Figure 2) is not particularly limited, but is preferably, for example, 5 nm or more and 1,000 µm or less, more preferably 10 µm or more and 100 µm or less, and particularly preferably 30 µm or more and 50 µm or less. The depth D of the recess 21A (see Figure 2) is not particularly limited, but is preferably, for example, 10 nm or more and 1,000 µm or less, more preferably 1 µm or more and 100 µm or less, and particularly preferably 1 µm or more and 10 µm or less.

Since the surface-roughened portion 21 has an uneven shape, it has recesses 21A and protrusions 21B. The recesses 21A are provided between the protrusions 21B. In Figure 2, the recess 21A refers to a region between a virtual line (dashed line) connecting the tops of the protrusions 21B and the surface of the surface-roughened portion 21. The surface-roughened portion 21 may be formed by a conventionally known method, and examples thereof include a method of chemically or mechanically roughening the surface of the member 20. Specifically, examples include a method of forming metal clusters by laser irradiation, a blasting method such as sandblasting or shot blasting, an etching method, an immersion method using an etching solution or an etching suspension, and an anodizing method.

The arithmetic mean curvature (Spc) of peak summits in the surface-roughened portion 21 is preferably 2,000 (1/mm) or more and 4,500 (1/mm) or less. Spc is a parameter of surface texture defined in ISO 25178 and represents the average value of principal curvatures of peak summits formed on the surface under evaluation. When Spc is small, it indicates that points (peak summits) contacting the resin molded article are rounded, and when Spc is large, it indicates that points contacting the resin molded article are sharp.

When the Spc of the surface-roughened portion 21 is within the above range, generation of gaps between the member 20 and the resin molded article 30 can be further suppressed, and thus airtightness can be more reliably ensured not only in the initial state but also after a thermal shock test. The reason for this is presumed to be as follows. Figures 4A to 4C schematically show bonding surfaces between the member 40 and the resin molded article 50 when the Spc of peak summits of the surface-roughened portion 41 formed on the surface 40A of the member 40 is high ("high Spc"), medium ("medium Spc"), and low ("low Spc"). When Spc of the surface-roughened portion 41 of the member 40 is high (see Figure 4A), peak summits of the surface-roughened portion 41 are sharp. When the resin composition in contact with the surface-roughened portion 41 is cooled, sink marks (due to shrinkage) 51 occur, and if the peak summits of the surface-roughened portion 41 are sharp, gaps are likely to form between the resin composition and the member 40 at the bonding surfaces of the peak summits, which is disadvantageous in achieving high airtightness. On the other hand, when Spc of the surface-roughened portion 41 is low (see Figure 4C), the surface-roughened portion 41 exhibits a gently varying surface texture. The surface area of the bonding portion between the member 40 and the resin molded article 50 is small, making it difficult to achieve high adhesion between the member 40 and the resin molded article 50 during molding of the composite molded article. In contrast, when Spc of the surface-roughened portion 41 is medium (see Figure 4B), molten resin composition sufficiently extends into the surface-roughened portion 41, and many anchor structures with the resin molded article 50 can be formed in the recesses 41A in the surface-roughened portion 41. For these reasons, when Spc of the surface-roughened portion 21 is within the above range, loosening (leak paths) of bonding portions due to expansion and contraction of the resin constituting the resin molded article during thermal shock tests is less likely to occur, and adhesion between the member 20 and the resin molded article 30 of the composite molded article 10 can be maintained at an extremely high level even after the thermal shock test.

The lower limit of Spc of the surface-roughened portion 21 is more preferably 2,100 (1/mm) or more, or 2,200 (1/mm) or more. The upper limit of Spc of the surface-roughened portion 21 is preferably 4,000 (1/mm) or less, 3,500 (1/mm) or less, or 3,000 (1/mm) or less. For example, the Spc of the surface-roughened portion 21 is more preferably 2,000 (1/mm) or more and 4,000 (1/mm) or less, 2,100 (1/mm) or more and 4,000 (1/mm) or less, 2,100 (1/mm) or more and 2,800 (1/mm) or less, or 2,200 (1/mm) or more and 2,800 (1/mm) or less.

The Spc of the surface-roughened portion 21 is measured using a laser microscope ("VK-X3000" manufactured by Keyence Corporation). When measuring the Spc of the surface-roughened portion 21 in the composite molded article 10, first, the resin molded article 30 on the surface-roughened portion 21 is removed using a chemical agent or the like, and the Spc is measured with the surface of the surface-roughened portion 21 exposed.

When the member 20 is a metal member and the protrusions 21B are composed of metal clusters, in order to adjust the Spc to fall within a desired range, the energy of laser irradiation applied to the surface serving as the bonding surface between the metal member and the resin molded article is controlled. When a pulse laser is used as laser, if average output is P and frequency is f, energy E per pulse is expressed as P/f. Thus, by adjusting the average output P (laser output) and/or the frequency f, the energy applied to the surface serving as the bonding surface between the member and the resin molded article can be controlled. For example, when the frequency of the pulse laser is increased, the amount of energy per pulse applied to the surface of the metal member decreases, and the Spc tends to decrease. On the other hand, when the frequency of the pulse laser is decreased, the amount of energy per pulse applied to the surface of the metal member increases, and the Spc tends to increase; however, when the energy is sufficiently large, the Spc reaches saturation.

The particle size of the particles constituting the metal clusters is preferably 1 µm or more and 500 µm or less, still more preferably 5 µm or more and 300 µm or less, and particularly preferably 10 µm or more and 200 µm or less. When the particle size of the particles is 1 µm or more, the resin fills the recesses, which are gaps between particles constituting the metal clusters, thereby further improving adhesion. When the particle size is 500 µm or less, gaps between the resin and the metal member due to shrinkage of the resin after molding are less likely to form, and airtightness can be more reliably ensured.

The material of the member 20 is not particularly limited, and examples thereof include metals, resins, and ceramics. Examples of metals include aluminum, copper, silver, gold, iron, titanium, nickel, magnesium, zinc, and alloys thereof such as carbon steel and stainless steel.

When the material of the member 20 is a metal, the surface 20A of the member 20 may be subjected to surface treatment such as anodizing, or coating. From the viewpoint of lightweight and strength, aluminum, magnesium, copper, and titanium are preferably used as the metal. In applications requiring conductivity, such as terminals, aluminum and copper are more preferably used, and copper is particularly preferred. In applications requiring rigidity in thin-walled applications, magnesium and titanium are preferably used, with titanium being particularly preferred.

### <<Resin molded article>>

The resin molded article 30 comprises a resin 31 that extends at least into the recess 21A present in the surface-roughened portion 21, and a stretched elastomer 32 present in the resin 31 and having an aspect ratio, defined as the ratio of its major axis to minor axis (major axis/ minor axis), of 1.5 or more. The resin molded article 30 may further comprise, in addition to the resin 31 and the stretched elastomer 32, an elastomer 33 having an aspect ratio of 1 or more and less than 1.5, an inorganic filler, and/or an additive.

The resin molded article 30 shown in Figures 1A and 1B covers part of the member 20. The resin molded article 30 has a disk portion 30A, an annular portion 30B adjacent to the disk portion 30A and having a smaller outer diameter than the disk portion 30A, and flat portions 30C located on both sides of the disk portion 30A in the longitudinal direction of the member 20 and adjacent to the disk portion 30A.

### <Resin>

The resin 31 is not particularly limited, and for example, a thermoplastic resin may be used. Examples of thermoplastic resins include polyolefin-based resins such as polypropylene resin, polyethylene resin, poly(1-)butene resin, and polypentene resin; polyester-based resins such as polybutylene terephthalate resin (PBT), polyethylene terephthalate resin (PET), and polytrimethylene terephthalate resin (PTT); polyacetal-based resins; polyarylene sulfide-based resins such as polyphenylene sulfide resin; and polyamide-based resins. In addition, a resin mixture obtained by blending multiple resins is also included in the resin. Polyarylene sulfide-based resins have excellent mechanical properties, electrical characteristics, heat resistance, and other physical and chemical properties, and good processability.

### (Polyarylene sulfide-based resin)

Polyarylene sulfide-based resin is a polymer compound mainly composed of repeating units of -(Ar-S)-(where Ar represents an arylene group), and a polyarylene sulfide resin having a generally known molecular structure may be used in the present embodiment.

Examples of the arylene group include a p-phenylene group, a m-phenylene group, an o-phenylene group, a substituted phenylene group, a p,p'-diphenylene sulfone group, a p,p'-biphenylene group, a p,p'-diphenylene ether group, a p,p'-diphenylene carbonyl group, and a naphthalene group. The PAS resin may be a homopolymer composed only of the above repeating units, or a copolymer containing different repeating units described below may be preferred in some cases in terms of processability and the like.

As the homopolymer, a polyphenylene sulfide resin (also referred to as a PAS resin) having a p-phenylene sulfide unit as a repeating unit, in which the arylene group is a p-phenylene group, is preferably used. As the copolymer, combinations of two or more different arylene sulfide groups derived from the above arylene groups may be used, and among these, combinations including a p-phenylene sulfide group and an m-phenylene sulfide group are particularly preferred. Among these, those containing 70% by mole or more, preferably 80% by mole or more, of the p-phenylene sulfide group are preferred from the viewpoint of physical properties such as heat resistance, moldability, and mechanical properties.

Among these PAS resins, a substantially linear high molecular weight polymer obtained by polycondensation of a monomer mainly composed of a difunctional halogenated aromatic compound is particularly preferably used. The polyarylene sulfide-based resin used in the present embodiment may be a mixture of two or more polyphenylene sulfide resins having different molecular weights.

In addition to linear polyphenylene sulfide resins, examples include polymers in which a monomer such as a polyhalogenated aromatic compound having three or more halogen substituents is used in a small amount during polycondensation to form a partially branched or crosslinked structure, and polymers obtained by heating a low molecular weight linear polymer at high temperature in the presence of oxygen or the like to increase melt viscosity through oxidative or thermal crosslinking, thereby improving moldability.

### (Polybutylene terephthalate-based resin)

The polybutylene terephthalate-based resin (PBT-based resin) is obtained by polycondensation of a dicarboxylic acid component including at least terephthalic acid or an ester-forming derivative thereof (a C₁₋₆ alkyl ester, an acid halide or the like) and a glycol component including at least alkylene glycol having 4 carbon atoms (1,4-butanediol) or an ester-forming derivative thereof (an acetylated product or the like). The PBT resin is not limited to homo(polybutylene terephthalate) and may be a copolymer containing 60% by mole or more (in particular, 75% by mole or more and 95% by mole or less) of butylene terephthalate units.

The amount of the terminal carboxyl group in the PBT resin is not particularly limited, and preferably 30 meq/kg or less and more preferably 25 meq/kg or less.

In the PBT resin, examples of dicarboxylic acid components (comonomer components) other than terephthalic acid and an ester-forming derivative thereof include: C₈₋₁₄ aromatic dicarboxylic acids such as isophthalic acid, phthalic acid, 2,6-naphthalenedicarboxylic acid, and 4,4'-dicarboxydiphenyl ether; C₄₋₁₆ alkanedicarboxylic acids such as succinic acid, adipic acid, azelaic acid, and sebacic acid; C₅₋₁₀ cycloalkanedicarboxylic acids such as cyclohexanedicarboxylic acid; and ester-forming derivatives (such as C₁₋₆ alkyl ester derivatives or acid halides) of these dicarboxylic acid components. These dicarboxylic acid components may be used singly or in combination of two or more types.

Among these dicarboxylic acid components, C₈₋₁₂ aromatic dicarboxylic acids such as isophthalic acid, and C₆₋₁₂ alkanedicarboxylic acids such as adipic acid, azelaic acid, and sebacic acid are more preferable.

Examples of glycol components (comonomer components) other than 1,4-butanediol in the PBT resin include C₂₋₁₀ alkylene glycols such as ethylene glycol, propylene glycol, trimethylene glycol, 1,3-butylene glycol, hexamethylene glycol, neopentyl glycol, and 1,3-octanediol; polyoxyalkylene glycols such as diethylene glycol, triethylene glycol, and dipropylene glycol; alicyclic diols such as cyclohexanedimethanol and hydrogenated bisphenol A; aromatic diols such as bisphenol A and 4,4'-dihydroxybiphenyl; C₂₋₄ alkylene oxide adducts of bisphenol A such as an ethylene oxide 2-mol adduct of bisphenol A and a propylene oxide 3-mol adduct of bisphenol A; or ester-formable derivatives of these glycols (acetylated products and the like). These glycol components may be used singly or in combination of two or more types.

Among these glycol components, C₂₋₆ alkylene glycols such as ethylene glycol and trimethylene glycol, polyoxyalkylene glycols such as diethylene glycol, or alicyclic diols such as cyclohexanedimethanol are more preferable.

Examples of comonomer components that can be used in addition to the dicarboxylic acid component and the glycol component include: aromatic hydroxycarboxylic acids such as 4-hydroxybenzoic acid, 3-hydroxybenzoic acid, 6-hydroxy-2-naphthoic acid, and 4-carboxy-4'-hydroxybiphenyl; aliphatic hydroxycarboxylic acids such as glycolic acid and hydroxycaproic acid; C₃₋₁₂ lactones such as propiolactone, butyrolactone, valerolactone, and caprolactone (such as ε-caprolactone); and ester-forming derivatives (such as C₁₋₆ alkyl ester derivatives, acid halides, and acetylated products) of these comonomer components.

The melt viscosity of the resin composition constituting the resin 31 is preferably 50 Pa·s or more and 350 Pa·s or less. When the melt viscosity of the resin composition is 50 Pa·s or more, the elastomer is more likely to be stretched as it extends into the recess interfacial region R described below. When the melt viscosity is 350 Pa·s or less, the resin 31 is more likely to extend into the recess 21A, thereby enabling the stretched elastomer 32 to be present in the recess interfacial region R. The lower limit of the melt viscosity of the resin composition is more preferably 60 Pa·s or more, 70 Pa·s or more, or 100 Pa·s or more, and the upper limit is more preferably 320 Pa·s or less, 300 Pa·s or less, or 280 Pa·s or less. For example, the melt viscosity of the resin composition is more preferably 50 Pa·s or more and 350 Pa·s or less, 70 Pa·s or more and 300 Pa·s or less, or 100 Pa·s or more and 280 Pa·s or less.

The melt viscosity of the resin composition is measured in accordance with ISO 11433 as follows. The melt viscosity is measured using a capillary rheometer ("Capilograph" (registered trademark) manufactured by Toyo Seiki Seisaku-sho, Ltd.), with a flat die of 1 mmΦ × 20 mmL used as the capillary under conditions of a barrel temperature of 310°C and a shear rate of 1000 s⁻¹.

When the resin 31 is composed of a polyester-based resin composition, the melt viscosity of the polyester-based resin composition measured at 310°C and a shear rate of 1000 s⁻¹ is preferably 100 Pa·s or more and 300 Pa·s or less, and more preferably 150 Pa·s or more and 280 Pa·s or less, for the same reasons as those described above for the melt viscosity of the resin composition.

When the resin 31 is composed of a polyarylene sulfide-based resin composition, the melt viscosity of the polyarylene sulfide-based resin composition measured at 310°C and a shear rate of 1000 s⁻¹ is preferably 100 Pa·s or more and 350 Pa·s or less, and more preferably 150 Pa·s or more and 300 Pa·s or less, for the same reasons as those described above for the melt viscosity of the resin composition.

In terms of the properties of the resin composition, crystallization temperature, in addition to the above melt viscosity characteristics, is also considered to influence interfacial adhesion. When a resin composition having a low recrystallization temperature is used, owing to its low recrystallization temperature, the resin more readily extends into the recesses on the surface of the metal member, thereby improving wettability. As a result, mechanical bonding is achieved through an anchoring effect, and adhesion at the interface between the member (particularly the metal member) and the resin composition is further improved.

### <Stretched elastomer>

The stretched elastomer 32 is an elastomer having an aspect ratio, defined as the ratio of its major axis to minor axis (major axis/ minor axis), of 1.5 or more in a cross section obtained by cutting the composite molded article 10 in the thickness direction of the resin molded article 30. In the present specification, the "minor axis" means the shortest diameter of the elastomer, and the "major axis" means the longest diameter of the elastomer. The aspect ratio of the elastomer in the cross section of the composite molded article can be determined from images obtained using a scanning electron microscope (SEM).

The stretched elastomer 32 has an aspect ratio of 1.5 or more, and the aspect ratio of the stretched elastomer 32 is preferably 5 or more and 30 or less. When the aspect ratio is 5 or more, the stretched elastomer 32 forms a layered structure, thereby ensuring airtightness not only in the initial state but also after the thermal shock test. Furthermore, when the aspect ratio is 30 or less, the elastomer is maintained as a single integrated shape in its stretched state. The lower limit of the aspect ratio of the stretched elastomer 32 is more preferably 8 or more, 11 or more, or 21 or more, and the upper limit is preferably 28 or less, 25 or less, or 20 or less. For example, the aspect ratio of the stretched elastomer 32 is more preferably 8 or more and 30 or less, 10 or more and 25 or less, or 11 or more and 20 or less.

In the above cross section, at least a portion of the stretched elastomer 32 is present in the recess interfacial region R located within the recess 21A and aligned with the interface IF between the resin 31 and the surface-roughened portion 21. As used herein, the "recess interfacial region" refers to a region, in a cross-section obtained by cutting the composite molded article in the thickness direction of the composite molded article, which is located within the recess and extends 1 µm into the resin interior from the interface between the resin and the surface-roughened portion, bounded by a virtual line along the interface and the interface. In FIG. 2, the recess interfacial region R is a region within the recess 21A that extends 1 µm into the interior of the resin 31 from the interface IF between the resin 31 and the surface-roughened portion 21, bounded by a virtual line (two-dot chain line) along the interface IF and the interface IF. At least a portion of the stretched elastomer 32 is present in the recess interfacial region R. As long as a portion of the stretched elastomer 32 is present in the recess interfacial region R, other portions of the stretched elastomer 32 may be present outside the recess interfacial region R. In FIG. 2, not only the stretched elastomer 32 entirely within the recess interfacial region R but also the stretched elastomer 32 partially within the recess interfacial region R and partially outside the recess interfacial region R are shown.

At least a portion of the stretched elastomer 32 within the recess interfacial region R is present along the interface IF. When the stretched elastomer 32 is present in this manner, even when the composite molded article 10 expands or contracts due to a thermal shock test, the stretched elastomer 32 relieves stress and strain generated at the interface IF between the member 20 and the resin molded article 30, thereby preventing the formation of cracks and gaps, and thus good airtightness can be achieved even after the thermal shock test. The expression "at least a portion of the stretched elastomer is present along the interface" includes not only a portion of the stretched elastomer extending parallel to the interface but also a portion extending slightly offset from the interface but still substantially along the interface.

It is sufficient that one stretched elastomer 32 is present in the recess interfacial region R in the above cross section, but it is preferable that two or more stretched elastomers 32 are present. When two or more stretched elastomers 32 are present in the recess interfacial region R, the average aspect ratio of the stretched elastomers 32 in the recess interfacial region R is preferably within the same range as the above aspect ratio of the stretched elastomer 32. For example, when five or more stretched elastomers are observed in the above cross section, the average value of the aspect ratios of three randomly selected stretched elastomers is taken as the average aspect ratio of the stretched elastomers.

The average aspect ratio of the stretched elastomer 32 is preferably at least twice, and more preferably at least five times the average aspect ratio of elastomers present outside the recess 21A.

The difference in melt viscosity between the resin 31 and the elastomer is preferably small. When the difference in melt viscosity between the resin 31 and the elastomer is small, the elastomer is less likely to remain in a rounded, unstretched state, thereby facilitating formation of the stretched elastomer 32 in the recess, and the stretched elastomer 32 is less likely to be separated from the resin 31. Even when the difference in melt viscosity between the resin and the elastomer is large, if the elastomer has a low viscosity, the elastomer is expected to be stretched, and thus the stretched elastomer 32 is considered to be formed in the recess.

The melt index (MI) of the elastomer measured at 190°C and a load of 21 N is preferably 1 g/10 min or more and 10 g/10 min or less. When the melt index (MI) of the elastomer is 1 g/10 min or more, the elastomer can be stretched, and when it is 10 g/10 min or less, the stretched elastomer 32 can be more easily formed in the recess interfacial region R.

The melting point of the elastomer is preferably 80°C or less, and more preferably 60°C or less. When the melting point of the elastomer is 80°C or less, at least a portion of the elastomer 33 more easily extends into the recess 21A during molding of the resin molded article 30, and the stretched elastomer 32 can be more easily formed. The lower limit of the melting point of the elastomer may be 45°C or more. The melting point of the elastomer can be determined by a differential scanning calorimeter (DSC).

Examples of the stretched elastomer 32 include olefin-based elastomers, styrene-based elastomers, silicone-based elastomers, polyester-based elastomers, polyamide-based elastomers, and urethane-based elastomers.

The olefin-based elastomer is a copolymer containing ethylene and/or propylene as components, and specific examples include, but are not limited to, ethylene-propylene copolymers, ethylene-butene copolymers, ethylene-octene copolymers, ethylene-propylene-butene copolymers, ethylene-propylene-diene copolymers, ethylene-ethyl acrylate copolymers, ethylene-vinyl acetate copolymers, and ethylene-glycidyl methacrylate copolymers. Epoxy group-containing olefin-based copolymers having a group reactive with an inorganic filler are most preferred.

Furthermore, among the olefin-based elastomers, graft copolymers may also be used, including graft copolymers in which one or more polymers or copolymers composed of a repeating unit represented by the following formula (1) is chemically bonded in a branched or crosslinked structure to an ethylene-unsaturated carboxylic acid alkyl ester copolymer or an olefin-based copolymer composed of an α-olefin and a glycidyl ester of an α,β-unsaturated acid. 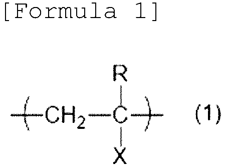 In the above formula (1), R represents hydrogen or a lower alkyl group, and X represents one or more groups selected from -COOCH₃, -COOC₂H₅, -COOC₄H₉, - COOCH₂CH(C₂H₅)C₄H₉, -C₆H₅, and -CN.

C2 to C4 olefins such as ethylene and propylene may be used, and ethylene and propylene are preferred as α-olefin. Glycidyl acrylate and glycidyl methacrylate are preferably used as the glycidyl ester of α,β-unsaturated acid. In addition, a third component such as a C1 to C12 (meth)acrylate ester or vinyl acetate may be copolymerized.

The contents of olefin and glycidyl ester in the copolymer may be adjusted to 30% by mole or more and 90% by mole or less, and 70% by mole or more and 10% by mole or less, respectively, in the copolymer. The third component may be present in an amount of 0% by mole or more and 30% by mole or less.

An ethylene-glycidyl methacrylate copolymer (hereinafter also referred to as EGMA) is preferred as the olefin-based elastomer. The proportion of glycidyl methacrylate relative to ethylene is not particularly limited, but, when the modified moieties are converted to monomer mass per 100 parts by mass of the copolymer, the proportion is preferably 1 part by mass or more and 30 parts by mass or less, more preferably 3 part by mass or more and 20 parts by mass or less, and still more preferably 8 part by mass or more and 15 parts by mass or less.

Examples of the styrene-based elastomer include block or graft copolymers (or hydrogenated products thereof) comprising a hard segment composed of a homopolymer or copolymer of an aromatic vinyl monomer such as styrene, α-methylstyrene, or vinyltoluene, and a soft segment composed of a homopolymer or copolymer of at least one monomer selected from α-olefins (such as α-C₂₋₁₂ olefins including ethylene, propylene, 1-butene, 1-hexene, and 1-octene) and diene-based monomers (such as butadiene and isoprene).

The styrene-based elastomer may also be an elastomer having a reactive functional group, such as an acid-modified elastomer modified with an acid or acid anhydride such as (meth)acrylic acid or maleic anhydride, or an epoxy-modified elastomer obtained by using a copolymerizable monomer having a glycidyl group or an epoxy group (such as glycidyl (meth)acrylate), or obtained by epoxidizing an unsaturated bond of the elastomer.

Representative examples of the styrene-based elastomer include styrene-diene-styrene block copolymers [styrene-butadiene-styrene block copolymer (SBS), styrene-isoprene-styrene block copolymer (SIS), and the like], hydrogenated block copolymers [styrene-ethylene · butylene-styrene block copolymer (or hydrogenated styrene-butadiene-styrene block copolymer) (SEBS), styrene-ethylene · propylene-styrene block copolymer (or hydrogenated styrene-isoprene-styrene block copolymer) (SEPS), styrene-ethylene · ethylene · propylene-styrene block copolymer (SEEPS), hydrogenated random styrene-butadiene copolymers, and the like], and modified copolymers in which a functional group (epoxy group, carboxyl group, acid anhydride group, or the like) is introduced into these copolymers [such as epoxidized styrene-diene copolymers in which unsaturated bonds of the diene are epoxidized (epoxidized styrene-diene-styrene block copolymers or hydrogenated polymers thereof)].

The silicone-based elastomer is an elastomer containing organopolysiloxane as the main component and is classified into polydimethylsiloxane-based elastomers, polymethylphenylsiloxane-based elastomers, and polydiphenylsiloxane-based elastomers. Part of the organopolysiloxane may be modified with a vinyl group, an alkoxy group or the like. Specific examples of the silicone elastomers include silicone rubber (poly(dimethylsiloxane) and poly(dimethylsiloxane-co-methylvinylsiloxane)).

Commercially available silicone elastomers include KE series (manufactured by Shin-Etsu Chemical Co., Ltd.), SE series, CY series, and SH series (all manufactured by Dow Corning Toray Co., Ltd.).

Examples of the polyester-based elastomer include, but are not limited to, block copolymers comprising an aromatic polyester such as polyethylene terephthalate or polybutylene terephthalate as a hard segment and a polyether such as polyethylene glycol or polytetramethylene glycol, or an aliphatic polyester such as polyethylene adipate, polybutylene adipate, or polycaprolactone, as a soft segment.

Examples of the polyamide-based elastomer include, but are not limited to, block copolymers comprising nylon 6, nylon 66, nylon 11, nylon 12, or the like as a hard segment and a polyether or an aliphatic polyester as a soft segment.

Examples of the urethane-based elastomer include, but are not limited to, block copolymers comprising a polyurethane obtained by reacting a diisocyanate such as 4,4'-diphenylmethane diisocyanate, 4,4'-dicyclohexylmethane diisocyanate, tolylene diisocyanate, or hexamethylene diisocyanate with a glycol such as ethylene glycol or tetramethylene glycol as a hard segment, and a polyether such as polyethylene glycol, polypropylene glycol, or polytetramethylene glycol, or an aliphatic polyester such as polyethylene adipate, polybutylene adipate, or polycaprolactone as a soft segment.

The stretched elastomer 32 is a reactive elastomer, and the reactive elastomer preferably has a glycidyl group. Since the reactive elastomer has a glycidyl group, when the member 20 is a metal member, adhesion between the metal member and the resin composition can be enhanced through physical interactions via van der Waals forces with the metal member surface, or chemical bonding via intermolecular forces with functional groups formed on the metal member surface. In addition, when the member 20 is a metal member, adhesion between the elastomer and the member 20 during molding of the resin molded article 30 can be improved, and thus when the resin composition extends into the recess 21A, the elastomer is stretched, thereby facilitating formation of the stretched elastomer 32.

### <Elastomer having aspect ratio of 1 or more and less than 1.5>

The elastomer 33 having an aspect ratio of 1 or more and less than 1.5 is an elastomer having an aspect ratio (major axis/ minor axis) of 1 or more and less than 1.5 in a cross section obtained by cutting the composite molded article 10 in the thickness direction of the resin molded article 30.

The elastomer 33 may be present not only within the recess 21A but also outside the recess 21A. The elastomer 33 may be present within the recess interfacial region R, or outside the recess interfacial region R.

The elastomer 33 is the same as the stretched elastomer 32 except for the aspect ratio. Therefore, the elastomer 33 has the same melting point and melt viscosity as those of the stretched elastomer 32, as described above.

### <Inorganic filler>

The inorganic filler is incorporated for the purpose of improving mechanical strength, heat resistance, dimensional stability (deformation resistance and warpage resistance), and electrical properties. As the inorganic filler, fibrous, particulate, and plate-like fillers may be used depending on the intended purpose. Examples of fibrous fillers include glass fibers, asbestos fibers, carbon fibers, silica fibers, silica/alumina fibers, zirconia fibers, boron nitride fibers, boron fibers, potassium titanate fibers, and furthermore, inorganic fibrous substances such as fibrous substances of a metal such as stainless steel, aluminum, titanium, copper, brass, or the like. Particularly representative fibrous fillers include glass fibers and carbon fibers. On the other hand, examples of the particulate fillers include carbon black, silica, quartz powder, glass beads, glass powder, calcium silicate, aluminum silicate, kaolin, talc, clay, diatomaceous earth, silicates such as wollastonite, metal oxides such as iron oxide, titanium oxide, zinc oxide, and alumina, metal carbonates such as calcium carbonate and magnesium carbonate, metal sulfates such as calcium sulfate and barium sulfate, silicon carbide, silicon nitride, boron nitride, and various metal powders. In addition, examples of the plate-like fillers include mica, glass flakes, and various metal foils. Among these, glass fibers, calcium carbonate, glass beads, or a combination thereof are preferred. These inorganic fillers may be used alone or in combination of two or more.

### <Additives>

Examples of additives include nucleating agents, carbon black, pigments such as calcined inorganic pigments, antioxidants, stabilizers, plasticizers, lubricants, release agents, and flame retardants.

The present inventors conducted intensive studies on the airtightness of a composite molded article in the initial state and after a thermal shock test, and found that, by causing a stretched elastomer to be present along the interface in a recess interfacial region, sufficient airtightness can be ensured not only in the initial state but also after a thermal shock test. Here, the thermal shock test, also referred to as a cold/heat shock test, is a test in which a material is subjected to repeated rapid temperature changes to induce expansion and contraction, thereby generating thermal stress and thermal strain within the material, to observe whether defects such as cracks occur. In particular, the interface between the member and the resin molded article is a portion where defects such as cracks are likely to occur and can serve as a starting point for a decrease in airtightness. Therefore, gas or liquid leakage is likely to occur at this interface. However, it is considered that, by causing at least a portion of the stretched elastomer to be present along the interface in the recess interfacial region, even when the composite molded article expands or contracts due to a thermal shock test, the stretched elastomer relieves stress and strain generated at the interface between the member and the resin molded article, thereby preventing the formation of cracks and gaps, and thus good airtightness can be achieved even after the thermal shock test. According to the present embodiment, since at least a portion of the stretched elastomer 32 is present in the recess interfacial region R along the interface IF, sufficient airtightness can be ensured not only in the initial state but also after a thermal shock test.

### <<<Method for producing composite molded article>>>

First, a member 20 having a surface-roughened portion 21 is prepared. As described above, the surface-roughened portion 21 may be formed by laser processing to form metal clusters, or may be formed by an etching method or a blasting method. For example, when the material of the member 20 is a metal and the surface-roughened portion 21 is formed by laser processing, the member 20 having the surface-roughened portion 21 can be formed as follows. When the member 20 made of metal is irradiated with laser, the metal on the surface of the member 20 melts under the high-energy laser beam, is pushed outward from the irradiated portion, and then solidifies into a spherical shape due to surface tension. By laser scanning the surface of the member 20 at a fine pitch, spherical particles are produced and overlap to form metal clusters. Alternatively, liquid metal particles that have sublimated and scattered from the member 20 solidify (re-adhere) and deposit to form spherical metal clusters, thereby forming the surface-roughened portion 21.

When forming metal clusters, if the laser output (energy per unit time) is low, the metal on the surface may not melt, and sublimation or scattering of liquid metal particles may not occur. Therefore, the laser output for forming spherical metal clusters is suitably determined depending on the metal material constituting the member 20. In order to make the molten metal pushed outward from the laser-irradiated portion into fine spheres, the laser scanning pitch is preferably 30 µm or less, still more preferably 20 µm or less, or 10 µm or less.

The energy applied to the metal surface per unit area per unit time is determined by the laser output and the irradiation speed. Therefore, in addition to the laser output, the irradiation speed also affects the formation of spherical metal clusters. The irradiation speed is preferably 600 mm/s or more and 2,000 mm/s or less. With an appropriate laser output and irradiation speed, a localized, extremely short-term temperature rise occurs on the metal surface, thereby forming spherical metal clusters. The irradiation speed is more preferably 800 mm/s or more and 2,000 mm/s or less, 900 mm/s or more and 1,800 mm/s or less, and still more preferably 1,000 mm/s or more and 1,500 mm/s or less.

Next, a resin composition containing an elastomer is prepared. When the resin composition is molded at a molding temperature equal to or higher than the melting point of the elastomer such that the resin composition extends into a recess 21A of the member 20 having a surface-roughened portion 21 having the recess 21A on at least a part of the surface 20A, the elastomer is stretched in a recess interfacial region R located within the recess 21A and aligned with the interface IF, thereby forming a stretched elastomer 32 having an aspect ratio of 1.5 or more along the interface IF. The elastomer that is not stretched or is stretched only to a small extent is referred to as elastomer 33. Molding is performed at a temperature equal to or higher than the melting point of the elastomer because the elastomer softens and is more easily stretched at a temperature equal to or higher than the melting point of the elastomer.

The content of the elastomer in the resin composition is preferably 3% by mass or more and 30% by mass or less. When the elastomer content is 3% by mass or more, the stretched elastomer 32 can be effectively present in the recess interfacial region R when the resin molded article 30 is formed. When the content is 30% by mass or less, since the elastomer content is not excessively high, the viscosity (fluidity) remains suitable for injection molding, allowing the resin composition to extend into the recess 21A and enabling at least a portion of the stretched elastomer 32 to be present in the recess interfacial region R.

Next, insert molding is performed using the member 20 having the surface-roughened portion 21 as an insert member and the resin composition. As a result, the resin and the elastomer extend into the recess 21A of the surface-roughened portion 21. At this stage, as the elastomer extends into the recess 21A, it is stretched to form the stretched elastomer 32. As a result, the composite molded article 10 can be obtained.

In the above insert molding, the injection speed is preferably in the range of 15 mm/sec to 100 mm/sec. In insert molding, when molten resin is injected into the mold cavity, it contacts the mold walls and cools to form solidified layers (skin layers). The molten resin flows between these two solidified layers (skin layers), generating shear forces between the solidified layers (skin layers) and the flowing layer. In this way, due to the shear force generated between the solidified layer (skin layer) and the flowing layer, molecular chains are stretched in the flow direction while flowing. Therefore, when the resin composition extends into the recess 21A, the elastomer is considered to readily form a stretched state due to the orientation of the molecular chains caused by the shear force. The shear rate can be calculated from the shape and thickness of the molded article, the cross-sectional area and volumetric flow rate of the injection molding machine, and it is estimated that the shear rate is in the range of 100 (1/sec) or more and 10,000 (1/sec) or less when the injection speed is 15 mm/sec or more and 100 mm/sec or less. By performing insert molding under the above conditions, at least a portion of the stretched elastomer 32 can be formed along the interface IF within the recess interfacial region R.

### [Examples]

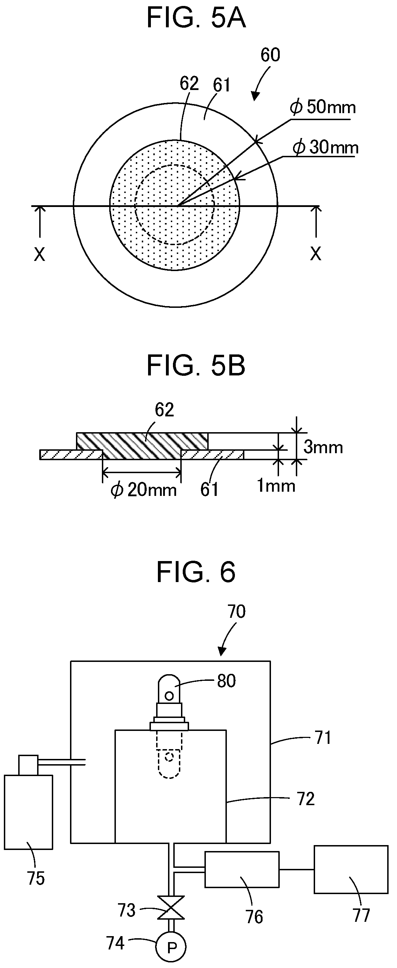

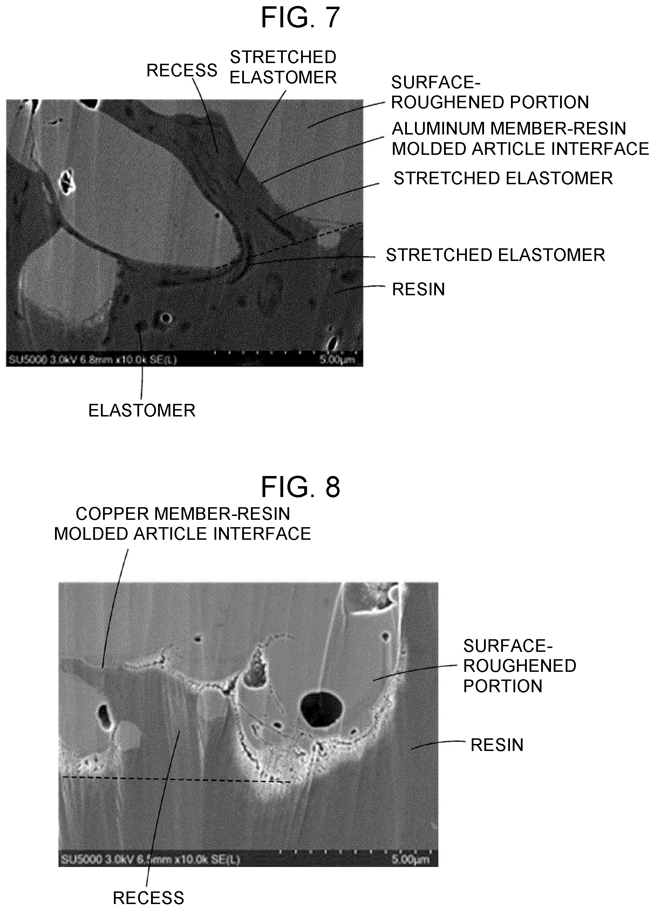

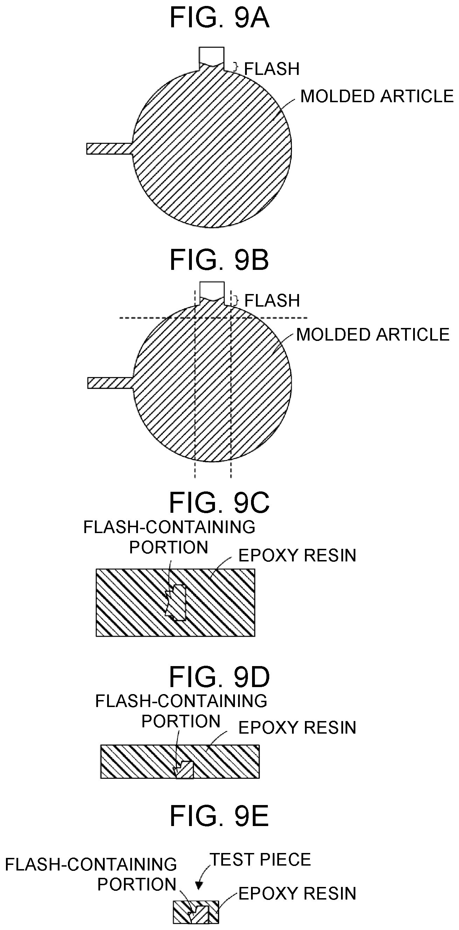

The present invention will be described in detail below with reference to Examples, but the present invention is not limited thereto. Figure 5A is a plan view of a composite molded article of Example 4; Figure 5B is a cross-sectional view taken along line X-X of Figure 5A; and Figure 6 is a schematic diagram of a test apparatus used in the airtightness test. Figure 7 is a scanning electron micrograph of a cross section of a composite molded article of Example 4, obtained by cutting the composite molded article in the thickness direction of the composite molded article. Figure 8 is a scanning electron micrograph of a cross section of a composite molded article of Comparative Example 2, obtained by cutting the composite molded article in the thickness direction of the composite molded article. Figures 9A to 9E are diagrams schematically illustrating a process for producing test pieces of Reference Examples 1 to 5.

### <Preparation of resin composition>

First, components were mixed so as to provide the compositions shown below to obtain the following resin compositions.

### (Resin composition 1)

- Polyarylene sulfide resin 1 (manufactured by Polyplastics Co., Ltd., melt viscosity: 20 Pa·s (shear rate: 1,000 sec⁻¹, temperature: 310°C)): 100 parts by mass
- Reactive elastomer 1 (ethylene (E) unit: 67% by weight, glycidyl methacrylate (GMA) unit: 6% by weight, methyl acrylate (MA) unit: 27% by weight, melting point: 52°C): 14.2 parts by mass
- Glass fiber 1 ("ECS03T747H" manufactured by Nippon Electric Glass Co., Ltd.): 70.8 parts by mass
- Calcium carbonate 1 ("MC-35W" manufactured by Asahi Kohmatsu Co., Ltd.): 47.2 parts by mass
- Pentaerythritol stearate ("LOXYOL VPG861" manufactured by Emery Oleochemicals Japan): 0.7 parts by mass
- Carbon black ("MA600B" manufactured by Mitsubishi Chemical Corporation): 0.5 parts by mass
- Antioxidant 1 ("Irganox 1010" manufactured by BASF Japan Ltd.): 0.7 parts by mass

### (Resin composition 2)

- Polyarylene sulfide resin 2 (manufactured by Polyplastics Co., Ltd., melt viscosity: 100 Pa·s (shear rate: 1,000 sec⁻¹, temperature: 310°C)): 100 parts by mass
- Reactive elastomer 1 (ethylene (E) unit: 67% by weight, glycidyl methacrylate (GMA) unit: 6% by weight, methyl acrylate (MA) unit: 27% by weight, melting point: 52°C): 14.2 parts by mass
- Glass fiber 1 ("ECS03T747H" manufactured by Nippon Electric Glass Co., Ltd.): 70.8 parts by mass
- Calcium carbonate 1 ("MC-35W" manufactured by Asahi Kohmatsu Co., Ltd.): 47.2 parts by mass
- Pentaerythritol stearate ("LOXYOL VPG861" manufactured by Emery Oleochemicals Japan): 0.7 parts by mass
- Carbon black ("MA600B" manufactured by Mitsubishi Chemical Corporation): 0.5 parts by mass
- Antioxidant 1 ("Irganox 1010" manufactured by BASF Japan Ltd.): 0.7 parts by mass

### (Resin composition 3)

- Polyarylene sulfide resin 3 (manufactured by Polyplastics Co., Ltd., melt viscosity: 28 Pa·s (shear rate: 1,000 sec⁻¹, temperature: 310°C)): 100 parts by mass
- Reactive elastomer 2 (ethylene (E) unit: 70% by weight, glycidyl methacrylate (GMA) unit: 3% by weight, methyl acrylate (MA) unit: 27% by weight, melting point: 52°C): 10.5 parts by mass
- Glass fiber 2 ("ECS03T747H" manufactured by Nippon Electric Glass Co., Ltd.): 61.2 parts by mass
- Pentaerythritol stearate ("LOXYOL VPG861" manufactured by Emery Oleochemicals Japan): 0.9 parts by mass
- Carbon black ("MA600B" manufactured by Mitsubishi Chemical Corporation): 0.3 parts by mass
- Antioxidant 1 ("Irganox 1010" manufactured by BASF Japan Ltd.): 0.5 parts by mass

### (Resin composition 4)

- Polyarylene sulfide resin 1 (manufactured by Polyplastics Co., Ltd., melt viscosity: 20 Pa·s (shear rate: 1,000 sec⁻¹, temperature: 310°C)): 43 parts by mass
- Polyarylene sulfide resin 3 (manufactured by Polyplastics Co., Ltd., melt viscosity: 28 Pa·s (shear rate: 1,200 sec⁻¹, temperature: 310°C)): 57 parts by mass
- Reactive elastomer 3 (E unit: 59.5% by weight, GMA unit: 10.5% by weight, MA unit: 0% by weight, melting point: 96.7°C): 14.2 parts by mass
- Glass fiber 2 ("ECS03T747" manufactured by Nippon Electric Glass Co., Ltd.): 85.6 parts by mass
- Calcium carbonate 2 ("Whiton P-30" manufactured by Toyo Fine Chemical Co., Ltd.): 36.7 parts by mass
- Pentaerythritol stearate (LOXYOL VPG861 manufactured by Emery Oleochemicals Japan): 1.0 part by mass
- Carbon black ("MA600B" manufactured by Mitsubishi Chemical Corporation): 1.0 parts by mass
- Antioxidant 2 ("Irganox 245" manufactured by BASF Japan Ltd.): 0.5 parts by mass

### (Resin composition 5)

- Polyarylene sulfide resin 3 (manufactured by Polyplastics Co., Ltd., melt viscosity: 28 Pa·s (shear rate: 1,000 sec⁻¹, temperature: 310°C)): 100 parts by mass
- Glass fiber 3 ("CS GL-HF" manufactured by Owens Corning Japan LLC): 70.5 parts by mass
- Pentaerythritol stearate ("LOXYOL VPG861" manufactured by Emery Oleochemicals Japan): 0.4 parts by mass
- Carbon black ("MA600B" manufactured by Mitsubishi Chemical Corporation): 0.9 parts by mass
- Alkoxysilane compound (manufactured by Shin-Etsu Chemical Co., Ltd., "KBE-903P"): 1.1 parts by mass

### <Example 1>

First, a copper member made of C1100, having a busbar shape and a length of 88.0 mm, a width of 20.1 mm, and a thickness of 1.6 mm, as shown in Figures 1A and 1B was prepared. Then, using a fiber laser processing machine (ML-7350DL manufactured by Amada Weld Tech Co., Ltd.), laser irradiation was performed on the front, back, and both side surfaces of the copper member under the conditions shown in Table 1 to form copper clusters at central portions of the respective surfaces, thereby forming surface-roughened portions each having a width of 5 mm. Thus, a copper member having surface-roughened portions on the respective surfaces was prepared.

Then, insert molding was performed using the copper member having the surface-roughened portion as an insert member and Resin Composition 1 under the following conditions to form a resin molded article on the surface of the copper member so as to have the shape shown in Figures 1A and 1B, thereby forming a composite molded article of Example 1 including the copper member and the resin molded article. The resin molded article was formed by insert molding so as to cover the surface-roughened portion. The insert molding conditions were as follows. The disk portion of the resin molded article had a diameter of 42 mm and a thickness T1 (see Figure 1A) of 5.0 mm; the annular portion had an outer diameter of 33 mm, an inner diameter of 31 mm, and a thickness T2 (see Figure 1A) of 4.6 mm; and the flat portion had a length of 15.5 mm, a width of 24.3 mm, and a thickness T3 (see Figure 1B) of 5.8 mm.
- Injection molding machine: TR100EH (manufactured by Sodick Co., Ltd.)
- Cylinder temperature: 330°C
- Mold temperature: 150°C
- Injection speed: 70 mm/s
- Packing pressure: 50 MPa
- Cooling time: 20 sec

### <Example 2>

A composite molded article of Example 2 was prepared in the same manner as in Example 1, except that Resin Composition 2 was used instead of Resin Composition 1.

### <Example 3>

In Example 3, a composite molded article was prepared in the same manner as in Example 1, except that the laser output was changed to 19.5 W and Resin Composition 2 was used instead of Resin Composition 1.

### <Example 4>

First, an aluminum member 61 made of A5052 in the form of an annular plate having an outer diameter of Φ50 mm, an inner diameter of Φ20 mm, and a thickness of 1 mm as shown in Figures 5A and 5B was prepared. Then, using a fiber laser processing machine (ML-7350DL manufactured by Amada Weld Tech Co., Ltd.), laser irradiation was performed on the surface of the aluminum member 61 in a concentric pattern over a region of Φ20 mm to Φ26 mm (a bonding surface with the resin molded article 62 described later) under the conditions shown in Table 1 to form aluminum clusters, thereby forming a surface-roughened portion. Thus, an aluminum member 61 having a surface-roughened portion on the surface was prepared.

Then, insert molding was performed using the aluminum member 61 having the surface-roughened portion as an insert member and Resin Composition 3 under the following conditions to form a resin molded article on the surface of the aluminum member 61 so as to have the shape shown in Figures 5A and 5B, thereby forming a composite molded article 60 of Example 4 including the aluminum member 61 and the resin molded article 62. The insert molding conditions were as follows. The resin molded article had an outer diameter of Φ30 mm and a thickness of 3 mm.
- Injection molding machine: TR100EH (manufactured by Sodick Co., Ltd.)
- Cylinder temperature: 320°C
- Mold temperature: 150°C
- Injection speed: 15 mm/s
- Packing pressure: 50 MPa
- Cooling time: 20 sec

### <Example 5>

In Example 5, a composite molded article was prepared in the same manner as in Example 4, except that a copper member made of C1100 having the same shape and dimensions as the aluminum member was used instead of the aluminum member.

### <Comparative Example 1>

In Comparative Example 1, a composite molded article was prepared in the same manner as in Example 1, except that Resin Composition 4 was used instead of Resin Composition 1.

### <Comparative Example 2>

In Comparative Example 2, a composite molded article was prepared in the same manner as in Example 1, except that Resin Composition 5 was used instead of Resin Composition 1 and no elastomer was added.

### <Confirmation of Presence of Stretched Elastomer and Calculation of Average Aspect Ratio>

Using a scanning electron microscope (SU5000 manufactured by Hitachi High-Tech Corporation), cross sections of the composite molded articles of Examples 1 to 5 and Comparative Examples 1 and 2 were observed to confirm whether at least a portion of the stretched elastomer was present, along the interface between the copper member and the resin molded article or between the aluminum member and the resin molded article, within the recess interfacial region of copper clusters present in the surface-roughened portion of the copper member or aluminum clusters present in the surface-roughened portion of the aluminum member, and whether elastomers having an aspect ratio of 1 or more and less than 1.5 were present outside the recess interfacial region within the recess. Specifically, the composite molded articles were cut in the thickness direction, and the cross sections were observed at a magnification of 10,000× to confirm the presence of the stretched elastomer and elastomers having an aspect ratio of 1 or more and less than 1.5. Furthermore, when at least a portion of the stretched elastomer was confirmed to be present along the interface within the recess interfacial region, the minor axis and major axis of the stretched elastomer were measured to determine the aspect ratio thereof, and the arithmetic mean was calculated as the average aspect ratio.

### <Airtightness test>

For the composite molded articles of Examples 1 to 5 and Comparative Examples 1 and 2, an airtightness test was conducted at the bonding surface between the copper member or the aluminum member and the resin molded article. The configuration of the test apparatus used in the airtightness test (helium leak test, vacuum method) is shown in Figure 6.

As shown in Figure 6, a test apparatus 70 included a chamber 71 hermetically sealed from the external environment. A jig 72 and a composite molded article 80 were placed in the chamber 71. The jig 72 has a box-like shape with a bottom, and by placing the composite molded article 80 of Examples 1 to 5 and Comparative Examples 1 and 2 on the upper opening thereof, the interior of the jig 72 is hermetically sealed from the remaining space in the chamber 71. With the valve 73 opened, the interior of the jig 72 was evacuated to a vacuum by a vacuum pump 74, and then, with the valve 73 closed, the chamber 71 was filled with helium gas from a helium cylinder 75. Helium gas that leaked from the joint of the composite molded article 80 in the chamber 71 was detected by a helium detector 76. The control device 77 displayed the detection results of the helium gas. A helium leak tester G-FINE manufactured by Cosmo Instruments Co., Ltd. and L300i manufactured by INFICON were used as the helium detector 76.

The pressure of helium in the chamber 71 was set to 400 kPa and the pressure in the jig 72 under vacuum was set to 100 kPa. When the airtightness at the joint between the copper member or aluminum member and the resin molded article of the composite molded article 80 is low, helium gas in the chamber 71 flows into the jig 72 and is detected by the helium detector 76. In this test, when the helium pressure (detected pressure) detected by the helium detector 76 was 1.0×10⁻⁷ Pa·m³/s or more, the airtightness was judged to be poor, and when it was less than 1.0×10⁻⁷ Pa·m³/s, the airtightness was judged to be good.

### <Thermal shock test>

The composite molded articles of Examples 1 to 5 and Comparative Examples 1 and 2 were subjected to a thermal shock test using the thermal shock testers ES-106LH and ES-77LHS manufactured by Hitachi Appliances, Inc. The thermal shock test was conducted with one cycle consisting of holding at -40°C for 30 minutes and holding at 150°C for 30 minutes, and 250 cycles were carried out. After 250 cycles, the resin molded article was taken out of the chamber, and the above airtightness test was conducted to evaluate thermal shock resistance (heat shock resistance).

The results are shown in the following Table 1.

**[Table 1]**

| | | Example 1 | Example 2 | Example 3 | Example 4 | Example 5 | Comparative Example 1 | Comparative Example 2 |
|---|---|---|---|---|---|---|---|---|
| Resin Composition No. | | 1 | 2 | 2 | 3 | 3 | 4 | 5 |
| Member Composition | | Cu(C1100) | Cu(C1100) | Cu(C1100) | Al(A5052) | Cu(C1100) | Cu(C1100) | Cu(C1100) |
| Laser Irradiation Conditions | Output (W) | 25 | 25 | 19.5 | 16 | 16 | 25 | 19.5 |
| | Frequency (kHz) | 50 | 50 | 50 | 50 | 50 | 50 | 50 |
| | Irradiation speed (mm/s) | 1000 | 1000 | 1000 | 1000 | 1000 | 1000 | 1000 |
| | Pitch (µm) | 10 | 10 | 10 | 10 | 10 | 10 | 10 |
| Stretched elastomer | Presence/absence | Present | Present | Present | Present | Present | Absent | Absent |
| | Average aspect ratio | 3 | 3 | 3 | 3 | 3 | - | - |
| Presence/absence of elastomer | | Present | Present | Present | Present | Present | Present | Absent |
| Member Spc (arithmetic mean curvature of peak summits) | | 2290 | 2290 | 3840 | 3840 | 2210 | 2290 | 3840 |
| Initial airtightness (detected pressure: Pa·m³/s) | | 1.00×10⁻¹¹ | 1.00×10⁻¹¹ | 1.00×10⁻¹¹ | 1.00×10⁻¹¹ | 1.00×10⁻¹⁰ | 1.00×10⁻⁷ | 1.00×10⁻⁷ |
| Airtightness after thermal shock test (detected pressure: Pa·m³/s) | | 1.00×10⁻¹¹ | 1.00×10⁻¹¹ | 1.00×10⁻¹¹ | 1.00×10⁻¹¹ | 1.00×10⁻¹⁰ | 1.00×10⁻⁷ | 1.00×10⁻⁷ |

As shown in Table 1 and Figure 8, in the composite molded articles of Comparative Examples 1 and 2, the stretched elastomer was not present, at least in part, in the recess interfacial region, and therefore airtightness in the initial state and after the thermal shock test was not achieved. In Comparative Example 1, because the presence of stretched elastomer was not confirmed, the average aspect ratio of the stretched copolymer was not measured. In contrast, as shown in Table 1 and Figure 7, in the composite molded articles of Examples 1 to 5, at least a portion of the stretched elastomer was present along the copper member-resin molded article interface or the aluminum member-resin molded article interface within the recess interfacial region, and therefore high airtightness at the joint between the copper member and the polyarylene sulfide-based resin and at the joint between the aluminum member and the polyarylene sulfide-based resin was confirmed both initially and after the thermal shock test. These results confirmed that sufficient airtightness can be achieved initially and after the thermal shock test by causing the stretched elastomer to be present along the copper member-resin molded article interface or the aluminum member-resin molded article interface within the recess interfacial region.

### <Reference Examples 1 to 5>

To examine the relationship between the melting point of the reactive elastomer and the average aspect ratio of the reactive elastomer after molding, test pieces of Reference Examples 1 to 5 were prepared. First, the above resin compositions 1 to 4 were molded under the following conditions to obtain a disk-shaped molded article having a diameter of 70 mm and a thickness of 3 mm, and a flash with a thickness of 30 µm (see Figure 9A). In order to simply reproduce the state in which the resin compositions 1 to 4 had extended into the surface-roughened portion having recesses, the flash was formed on the molded article.

### (Molding conditions)

- Molding machine: EC60N i1.5A manufactured by Toshiba Corporation
- Cylinder temperature: 320°C
- Mold temperature: 150°C
- Injection speed: 30 mm/s
- Packing pressure: minimum filling pressure (minimum pressure required for complete cavity filling) + 5 MPa
- Cooling time: 10 sec

A flash-containing portion having a length of 0.2 to 0.4 mm and a base width of 6 mm was cut out from the obtained molded article having a flash using a band saw (manufactured by YS Koki Co., Ltd.) (see Figure 9B), and the cut-out portion was embedded in epoxy resin to protect it (see Figure 9C). Then, the flash-containing portion embedded in epoxy resin was ground using a polishing machine (manufactured by Buehler K.K.) until its thickness was reduced to approximately half, thereby exposing a cross section of the flash-containing portion (see Figure 9D). Thereafter, the flash-containing portion with the exposed cross section was cut out using a diamond cutter (manufactured by Buehler K.K.). The cut-out portion was then fixed to a sample stage with hot wax (manufactured by Maruto Instrument Co., Ltd.), and the cross section of the flash-containing portion was subjected to milling under the following conditions.

### (Milling conditions)

- Milling apparatus ArBlade 5000 manufactured by Hitachi High-Tech Corporation
- Applied voltage: 3.4 kV
- Discharge voltage: 1.2 kV
- Cooling: none
- Processing time: 4.0 h
- Interval time: none

Then, the milled cross-section of the flash-containing portion was polished with #400, #1000, and #2000 grit in this order to obtain the test pieces of Reference Examples 1 to 5 (see Figure 9E).

The flash-containing portions of test pieces of Reference Examples 1 to 5 were observed by SEM under the following conditions to obtain SEM images.

### (SEM observation conditions)

- Apparatus: desktop SEM-EDX Phenom Pro X (manufactured by Phenom-World)
- Condition: backscattered electron image at 10 kV
- Observation magnification: 10,000×

Then, from the SEM images, five elastomers near the surface layer in the flash were randomly selected for each test piece, the aspect ratio of each elastomer was calculated as the ratio of the major axis to the minor axis, and the calculated aspect ratios were arithmetically averaged to obtain the average aspect ratio.

The results are shown in the following Table 2. The "Ratio" in Table 2 represents the aspect ratio of elastomers in the flash of each of the test pieces of Reference Examples 1 to 4, relative to the aspect ratio of elastomers in the flash of the test piece of Reference Example 5 taken as 1.

**[Table 2]**

| | Reference Example 1 | Reference Example 2 | Reference Example 3 | Reference Example 4 | Reference Example 5 |
|---|---|---|---|---|---|
| Resin Composition No. | 1 | 2 | 2 | 3 | 4 |
| Average aspect ratio | 24.7 | 22.4 | 22.4 | 28.8 | 18.1 |
| Ratio | 1.4 | 1.2 | 1.2 | 1.6 | 1 |

As shown in Table 2, elastomers in the flash of the test pieces of Reference Examples 1 to 4 were more highly stretched than those in the flash of the test piece of Reference Example 5. This is considered to be because the elastomers in the flash of the test piece of Reference Example 5 had a melting point exceeding 80°C, while the elastomers in the flash of the test pieces of Reference Examples 1 to 4 had a melting point of 80°C or lower. The results of Reference Examples 1 to 5 suggest that when the melting point of the elastomer is low, at least a portion of the elastomer more easily extends into the recess during molding of the resin molded article, and a stretched elastomer can be more easily formed.

10 Composite molded article
20: Member
20A: Surface
21: Surface-roughened portion
21A: Recess
21B: Protrusion
30: Resin molded article
31: Resin
32: Stretched elastomer
33: Elastomer
IF: Interface

## Claims

1. A composite molded article comprising a member and a resin molded article joined to the member, wherein
the member has a surface-roughened portion having a recess on at least a part of a surface thereof,
the resin molded article comprises a resin that extends at least into the recess, and a stretched elastomer present in the resin and having an aspect ratio, defined as the ratio of its major axis to minor axis, of 1.5 or more in a cross section obtained by cutting the composite molded article in the thickness direction of the resin molded article, and
in the cross section, at least a portion of the stretched elastomer is present along the interface between the member and the resin molded article in a recess interfacial region located within the recess and aligned with the interface.

2. The composite molded article according to claim 1, wherein the stretched elastomer is a reactive elastomer, and the reactive elastomer has a glycidyl group.

3. The composite molded article according to claim 1, wherein the resin is composed of a polyarylene sulfide-based resin composition, and the polyarylene sulfide-based resin composition has a melt viscosity of 10 Pa·s or more and 350 Pa·s or less.

4. The composite molded article according to claim 1, wherein the resin is composed of a polybutylene terephthalate-based resin composition, and the polybutylene terephthalate-based resin composition has a melt viscosity of 50 Pa·s or more and 300 Pa·s or less.

5. The composite molded article according to claim 1, wherein the member is a metal member, and the surface-roughened portion is a metal cluster.

6. A resin composition used for producing the composite molded article according to claim 1,
the resin composition comprising a resin and an elastomer having an aspect ratio, defined as the ratio of its major axis to minor axis, of 1 or more and less than 1.5, wherein
when the resin composition is molded at a molding temperature equal to or higher than the melting point of the elastomer such that the resin composition extends into a recess of the member having a surface-roughened portion having the recess on at least a part of a surface thereof, the elastomer is stretched in a recess interfacial region located within the recess and aligned with the interface between the member and the resin molded article, thereby forming a stretched elastomer having an aspect ratio of 1.5 or more along the interface.
